(19) Europäisches Patentamt
European Patent Office
Office européen des brevets

(11) Veröffentlichungsnummer : **0 058 880**
**B1**

(12) **EUROPÄISCHE PATENTSCHRIFT**

(45) Veröffentlichungstag der Patentschrift : **30.01.85**

(51) Int. Cl.⁴ : **D 06 L 3/12**

(21) Anmeldenummer : **82100955.2**

(22) Anmeldetag : **10.02.82**

# (54) Mischungen von optischen Aufhellern.

(30) Priorität : **12.02.81 DE 3104992**

(43) Veröffentlichungstag der Anmeldung : **01.09.82 Patentblatt 82/35**

(45) Bekanntmachung des Hinweises auf die Patenterteilung : **30.01.85 Patentblatt 85/05**

(84) Benannte Vertragsstaaten : **AT BE CH DE FR GB IT LI NL SE**

(56) Entgegenhaltungen :
**EP-A- 0 023 026**
**FR-A- 2 390 537**
**FR-A- 2 413 496**
**FR-A- 2 436 212**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Martini, Thomas, Dr.**
**Odenwaldstrasse 5**
**D-6233 Kelkheim (Taunus) (DE)**
Erfinder : **Frischkorn, Hans, Dr.**
**Martin-Wohmann-Strasse 3**
**D-6238 Hofheim am Taunus (DE)**
Erfinder : **Schinzel, Erich, Dr.**
**Ostpreussenstrasse 43**
**D-6238 Hofheim am Taunus (DE)**
Erfinder : **Probst, Heinz**
**Billtalstrasse 3**
**D-6231 Sulzbach (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 058 880 B1

Jouve, 18, rue St-Denis, 75001 Paris, France

**Beschreibung**

Optische Aufheller werden heute vielfach als Mischungen aus verschiedenen Typen eingesetzt, weil solche Mischungen oft einen synergistischen Effekt zeigen, d. h. der Weißgrad der Mischung ist höher als der Weißgrad der gleichen Menge der Einzelkomponenten für sich genommen. So sind beispielsweise bereits Mischungen von optischen Aufhellern bekannt, die aus einer Verbindung aus der Reihe der Bisbenzoxazolyl-styrole und einer weiteren Verbindung von der Struktur des Bis-benzoxazolyl-ethylens bestehen (Jap. Patent 50 102 621).

Bekannt sind auch solche Mischungen von optischen Aufhellern, die als wesentliche Komponente eine Verbindung aus der Reihe der Bis-(benzoxazolyl)-stilben-Derivate enthalten (FR-A-23 90 537 und FR-A-24 36 212).

Es wurde nun gefunden, daß man eine deutlich größere Erhöhung des Weißgrades erhält, wenn man die Bis-benzoxazolylstyrole mit einem anderen Aufheller der unten angegebenen Struktur abmischt.

Gegenstand der Erfindung sind daher Mischungen von optischen Aufhellern bestehend aus

a) 1 bis 99 Gew.-% einer oder mehrerer Verbindungen der Formel (1)

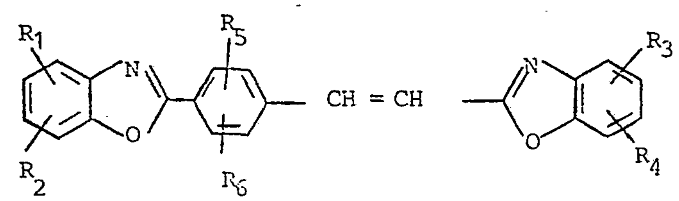

(1)

worin $R_1$, $R_2$, $R_3$, $R_4$, $R_5$ und $R_6$ gleich oder verschieden sein können und Wasserstoff, Chlor, Alkyl, Alkoxy oder Alkoxycarbonyl bedeuten und

b) 99 bis 1 Gew.-% einer oder mehrerer Verbindungen der Formeln (2), (3), (4) und (5)

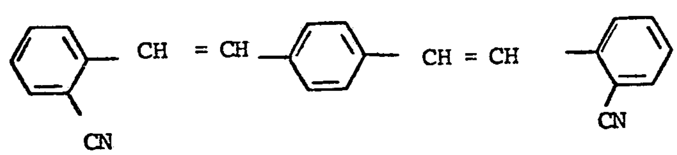

(2)

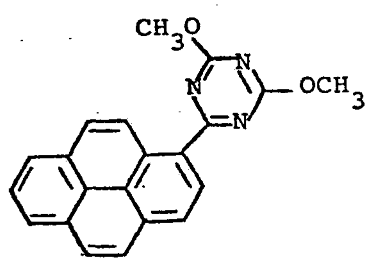

(3)

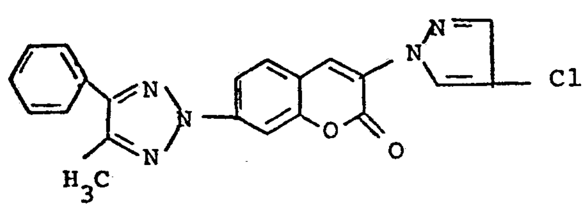

(4)

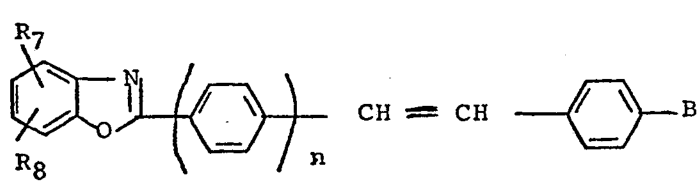

(5)

wobei

n 0 oder 1,

$R_7$ und $R_8$ gleiche oder verschiedene Reste aus der Gruppe Wasserstoff, Fluor, Chlor, Phenyl, Trifluormethyl, Alkyl, Alkoxy, Cyano, Carboxy, Alkoxycarbonyl, Carbonsäureamid oder Sulfonsäurealkylester bedeuten, wobei zwei benachbarte Reste $R_7$ und $R_8$ zusammen auch für einen Benzolring, eine niedere Alkylen- oder eine 1,3-Dioxanpropylengruppe stehen können,

B Cyano, eine Gruppe der Formel —$COOR_9$ oder $CONR_9R_9$, wobei $R_9$ Wasserstoff, $C_1$-$C_{18}$-Alkyl, Cycloalkyl, Aryl, Alkyl-aryl, Halogenaryl, Aralkyl, Alkoxyalkyl, Halogenalkyl, Hydroxyalkyl, Alkoxycarbonyl oder Alkoxycarbonyl alkyl bedeutet oder zwei Alkyl- bzw. Alkylenreste unter der Bedeutung von $R_9$ zusammen mit dem Stickstoffatom auch einen Morpholin-, Piperidin- oder Piperazinring bilden können, bedeutet, oder

B eine Gruppe der Formeln

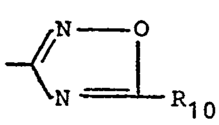, 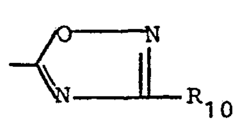, 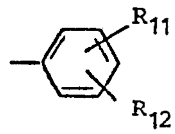 oder 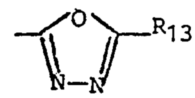

bedeutet,
wobei $R_{10}$ eine geradkettige oder verzweigte Alkylgruppe mit 1-18 C-Atomen, vorzugsweise 1-6 C-Atomen, die durch Hydroxylgruppen, Halogenatome, Alkoxy-, Aryloxy- oder Arylreste substituiert sein kann, oder $R_{10}$ eine Gruppe der Formel $—(CH_2CH_2O)_n—R$ mit n 1, 2 oder 3 und R = H oder Alkyl oder $R_{10}$ einen Rest der Formel

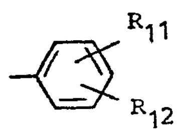

bedeutet, $R_{11}$ und $R_{12}$ gleiche oder verschiedene Reste aus der Gruppe Wasserstoff, Fluor, Phenyl, Alkyl, Alkoxy, Acylamino, Cyano, Carboxy, Alkoxycarbonyl, Carbonsäureamid oder Sulfonsäurealkylester bedeuten, wobei zwei benachbarte Reste $R_{11}$ und $R_{12}$ zusammen auch für eine Alkylengruppe, einen ankondensierten Benzolring oder eine 1,3-Dioxapropylengruppe stehen können und $R_{13}$ einen Phenylring, der durch eine Alkyl, Cyano- oder Alkoxycarbonylgruppe substituiert sein kann, bedeutet, mit der Maßgabe, daß alle Alkyl- und Alkoxygruppen, sowie andere, davon abgeleitete Gruppen 1 bis 4 C-Atome enthalten, soweit nicht anders definiert.

Von den Verbindungen der Formel (1) sind die Verbindungen bevorzugt, bei denen $R_2$, $R_4$, $R_5$ und $R_6$ Wasserstoff darstellen und $R_1$ und $R_3$ Methyl oder Ethyl jeweils in 5-Stellung bedeutet.

Von den Verbindungen der Formel (5) sind die Verbindungen der Formel (5a) bevorzugt.

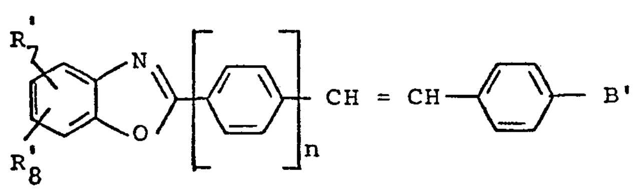 (5a)

wobei $R'_7$ und $R'_8$ zusammen einen ankondensierten Benzolring oder Wasserstoff, Chlor, Alkyl oder Phenyl, n 0 oder 1 und B' eine Gruppe der Formeln

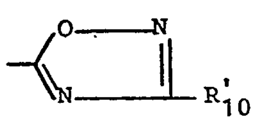, 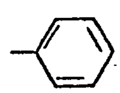, —CN oder —COO-Alkyl

und $R'_{10}$ Alkyl oder Alkoxyalkyl bedeutet.

Von besonderer Wichtigkeit sind die folgenden Verbindungen unter der Formel 5 :

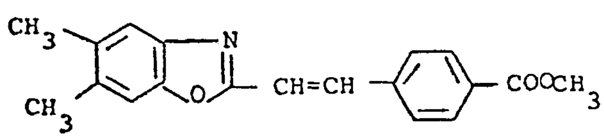

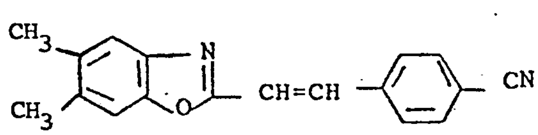

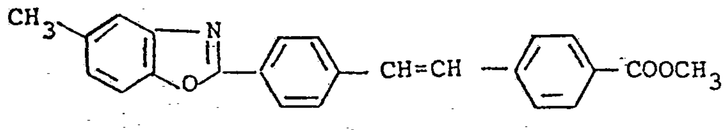

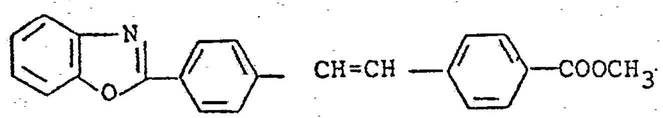

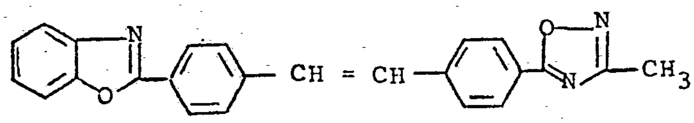

Soweit nicht anders definiert, enthalten Alkyl- und Alkoxygruppen sowie andere, davon abgeleitete Gruppen 1 bis 4 C-Atome.

Das Mischungsverhältnis für die einzelnen Komponenten liegt zwischen 1 und 99 Gew.-% für die übrigen Verbindungen der Formeln (2) bis (5). Diese Verbindungen der Formeln (2) bis (5) können einzeln, aber auch in beliebiger Mischung untereinander eingesetzt werden, wobei das Mischungsverhältnis dieser Verbindungen untereinander gänzlich unkritisch ist und beliebig variiert werden kann. Bevorzugt ist ein Mischungsverhältnis von 50 bis 99 Gew.-% für die Verbindung der Formel (1) und 50 bis 1 Gew.-% der Verbindungen der Formeln (2) bis (5).

Das optimale Mischungsverhältnis aller Verbindungen hängt im Einzelfall von der Struktur der jeweiligen Verbindungen ab und läßt sich durch einfache Vorversuche unschwer ermitteln.

Wie bei optischen Aufhellern üblich, werden die einzelnen Komponenten durch Dispergierung in einem flüssigen Medium z. B. Wasser in die Handelsform gebracht. Man kann dabei die einzelnen Komponenten jede für sich dispergieren und dann die Dispersionen zusammen geben. Man kann aber auch die Einzelkomponenten in Substanz miteinander mischen und dann gemeinsam dispergieren. Dieser Dispergiervorgang geschieht in üblicher Weise in Kugelmühlen, Kolloidmühlen, Perlmühlen oder Dispersionsknetern. Die erfindungsgemäßen Mischungen eignen sich besonders zum Aufhellen von Textilmaterial aus linearen Polyestern, Polyamiden und Acetylcellulose. Man kann diese Mischungen aber auch mit gutem Ergebnis bei Mischgeweben verwenden, die aus linearen Polyestern und anderen synthetischen oder natürlichen Faserstoffen namentlich hydroxylgruppenhaltigen Fasern, insbesondere Baumwolle bestehen. Die Applikation dieser Mischungen geschieht dabei unter den für die Anwendung von optischen Aufhellern üblichen Bedingungen so beispielsweise nach dem Ausziehverfahren bei 90 °C bis 130 °C mit oder ohne Zusatz von Beschleunigern (Carriern) und Bleichmitteln wie z. B. Natriumchlorit oder nach dem Thermosolverfahren. Die in Wasser unlöslichen Aufheller und die erfindungsgemäßen Mischungen können auch in organischen Lösemitteln z. B. Perchloräthylen, fluorierten Kohlenwasserstoffen gelöst zum Einsatz kommen. Dabei kann das Textilmaterial im Ausziehverfahren mit der Lösemittelflotte, welche den optischen Aufheller gelöst enthält, behandelt werden, oder man imprägniert, pflatscht, besprüht das Textilgut mit der aufhellerhaltigen Lösemittelflotte und trocknet anschließend bei Temperaturen von 120-220 °C, wobei der optische Aufheller dabei restlos in der Faser fixiert wird. Man erhält dabei eine hervorragend aufgehellte Ware mit ausgezeichneter Lichtbeständigkeit, Sublimationsechtheit, Temperaturbeständigkeit sowie Beständigkeit gegenüber Oxidations- und Reduktionsmitteln. Schon bei relativ niedrigen Fixiertemperaturen, z. B. bei 150 °C, erhält man mit diesen Mischungen hervorragende Weißtöne.

## Beispiele

Gewebe aus Polyester-Stapelfasern wurde im Klotz-Thermosolverfahren bei 150 °C, 170 °C bzw. 190 °C und einem Abquetscheffekt von 80 % sowie im Hochtemperatur-Ausziehverfahren bei 120 °C während 45 Minuten mit erfindungsgemäßen Mischungen optischer Aufheller behandelt. Als Mischungskomponente 1 der allgemeinen Formel (1) diente in allen Fällen die Verbindung der Formel

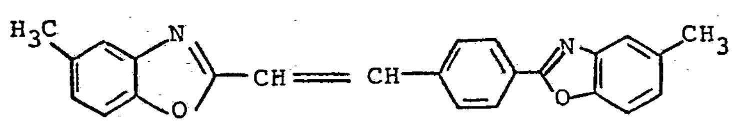

Aufheller, die nicht als handelsübliche Dispersionen vorlagen, wurden zuvor durch den sogenannten Schnellfinish dispergiert. Dazu werden jeweils 100 mg des oder der Aufheller in 5 ml Dimethylformamid und 5 ml einer 85 %igen Lösung von Nonylphenol ethoxyliert mit 22 bis 26 Einheiten Ethylenoxid klar gelöst und unter Rühren gleichmäßig in 90 g Eiswasser gegeben. An den Gewebeproben die behandelt

wurden, wie unten unter A-D beschrieben, wurden die Weißgrade nach Ciba-Geigy und die Nuance nach der Formel von Ganz mittels eines Elrepho-Tristimulus-Spektralphotometers bestimmt. Die gemessenen Weißgrade sowie die jeweiligen Applikationsbedingungen sind in den folgenden Tabellen zusammengefaßt. Zum Vergleich wurden Mischungen aus dem Aufheller der obigen Formel und einem Aufheller aus der Reihe der Bis-benzoxazolylethylene gemäß dem Stand der Technik mit ausgeprüft. In der ersten Spalte der Tabellen bezeichnen die Buchstaben A bis D die verschiedenen Applikationsverfahren und zwar bedeutet

A = Klotz-Thermosolverfahren 60 sek. bei 150 °C
B = Klotz-Thermosolverfahren 40 sek. bei 170 °C
C = Klotz-Thermosolverfahren 30 sek. bei 190 °C
D = Ausziehverfahren unter Hochtemperaturbedingungen (120 °C)

| Verfahren | Anteil der Mischungskomponente 1 | Formel und Anteil der Mischungskomponente 2 | Weißgrad | Nuance |
|---|---|---|---|---|
| A | 30 Gew.-% | 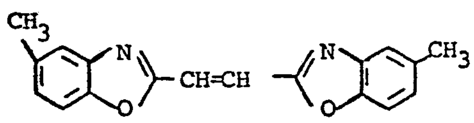 (Vergleich) 70 Gew.-% | 185 | 0,1 B |
| A | 30 Gew.-% | 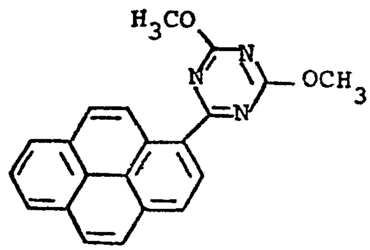 70 Gew.-% | 220 | 0,5 R |
| A | 30 Gew.% | 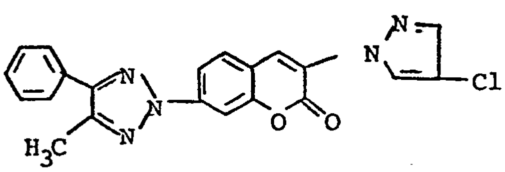 70 Gew.-% | 196 | 0,0 B |
| B | 30 Gew.% | 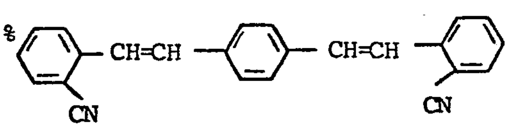 70 Gew.-% | 202 | - 0,4 B |
| A | 55 Gew.-% | 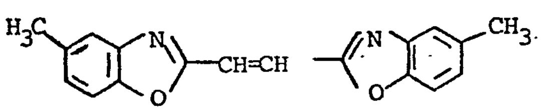 (Vergleich) 45 Gew.-% | 186 | 0,3 B |
| A | 55 Gew.-% | 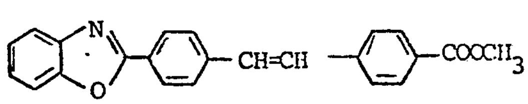 45 Gew.-% | 191 | 0,4 G |

(Fortsetzung)

| Verfahren | Anteil der Mischungskomponente 1 | Formel und Anteil der Mischungskomponente 2 | Weißgrad | Nuance |
|---|---|---|---|---|
| A | 55 Gew.-% | 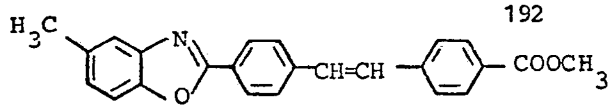 45 Gew.-% | 192 | 0,4 G |
| A | 55 Gew.-% | 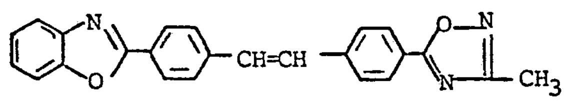 45 Gew.-% | 197 | 0,3 B |
| A | 35 Gew.-% | 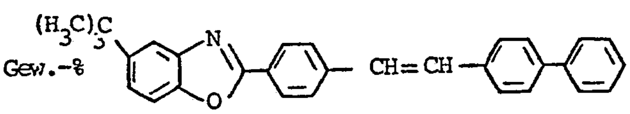 65 Gew.-% | 193 | 1,1 G |
| A | 35 Gew.-% | 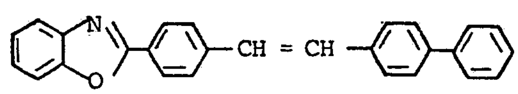 65 Gew.-% | 192 | 1,0 G |
| A | 20 Gew.-% | 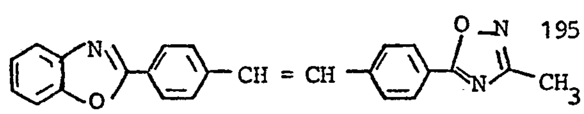 80 Gew.-% | 195 | 0,0 B |
| B | 55 Gew.-% | 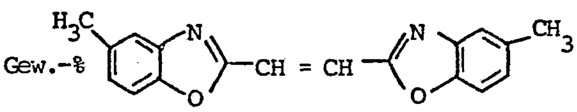 (Vergleich) 45 Gew.-% | 196 | 0,1 B |
| B | 55 Gew.-% | 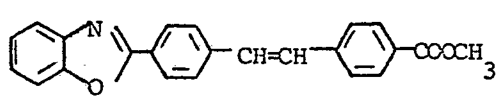 45 Gew.-% | 202 | 0,1 B |
| B | 55 Gew.-% | 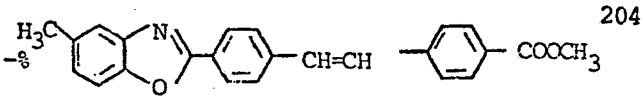 45 Gew.-% | 204 | 0,4 B |

(Fortsetzung)

| Verfahren | Anteil der Mischungskomponente 1 | Formel und Anteil der Mischungskomponente 2 | Weißgrad | Nuance |
|---|---|---|---|---|
| B | 80 Gew.-% | 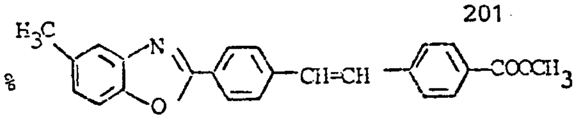 20 Gew.-% | 201 | - 0,4 B |
| B | 55 Gew.-% | 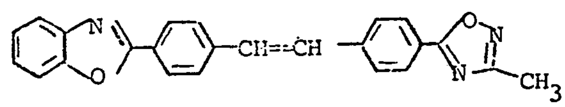 45 Gew.-% | 208 | 0,2 B |
| B | 80 Gew.-% | 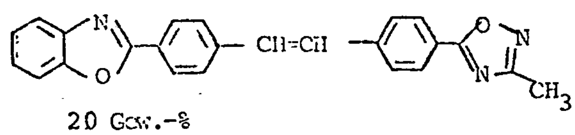 20 Gew.-% | 211 | - 0,2 B |
| C | 30 Gew.-% | 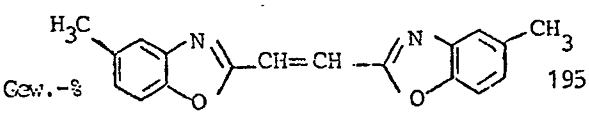 (Vergleich) 70 Gew.-% | 195 | 0,1 B |
| C | 30 Gew.-% | 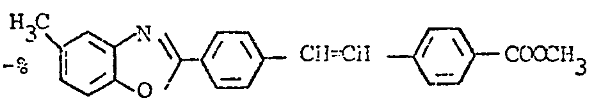 70 Gew.-% | 204 | 0,2 B |
| C | 30 Gew.-% | 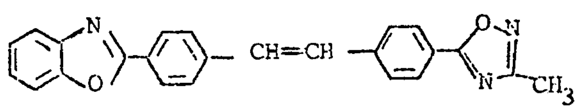 70 Gew.-% | 208 | 0,3 B |
| D | 30 Gew.-% | 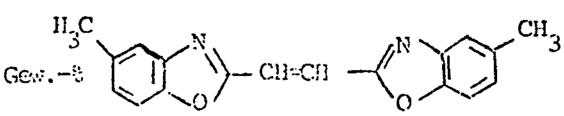 (Vergleich) 70 Gew.-% | 201 | 0,1 B |
| D | 30 Gew.-% | 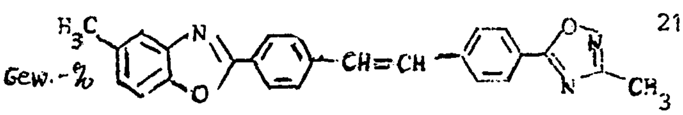 70 Gew.-% | 210 | 0,5 G |

(Fortsetzung)

| Verfahren | Anteil der Mischungskomponente 1 | Formel und Anteil der Mischungskomponente 2 | Weißgrad | Nuance |
|---|---|---|---|---|
| D | 30 Gew.-% | 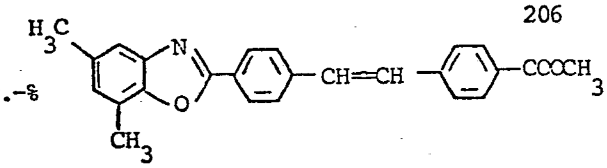 70 Gew.-% | 206 | 0,1 B |
| D | 30 Gew.-% | 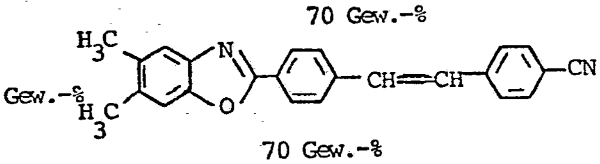 70 Gew.-% | 210 | 0,8 G |
| D | 30 Gew.-% | 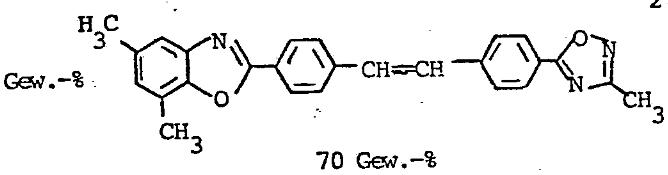 70 Gew.-% | 211 | 1,0 G |
| D | 30 Gew.-% | 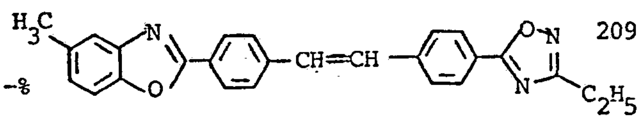 70 Gew.-% | 209 | 0,5 G |
| D | 30 Gew.-% | 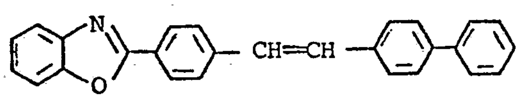 70 Gew.-% | 214 | 0,1 B |
| D | 30 Gew.-% | 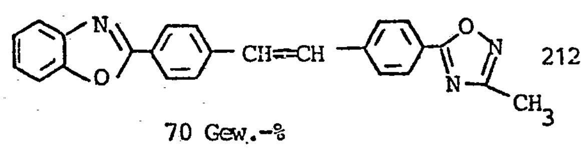 70 Gew.-% | 212 | 0,2 B |
| D | 30 Gew.-% | 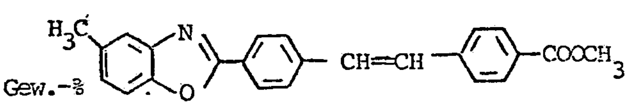 70 Gew.-% | 211 | - 0,1 B |

**Ansprüche**

1. Mischungen von optischen Aufhellern dadurch gekennzeichnet, daß sie bestehen aus
a) 1 bis 99 Gew.-% einer oder mehrerer Verbindungen der Formel (1)

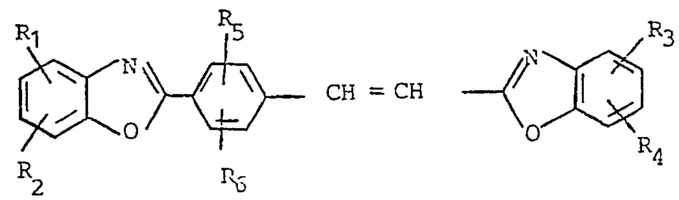

(1)

worin $R_1$, $R_2$, $R_3$, $R_4$, $R_5$ und $R_6$ gleich oder verschieden sein können und Wasserstoff, Chlor, Alkoxycarbonyl, Alkyl oder Alkoxy bedeuten und
b) 99 bis 1 Gew.-% einer oder mehrerer Verbindungen der Formeln (2), (3), (4) und (5)

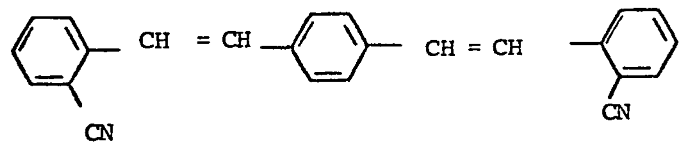

(2)

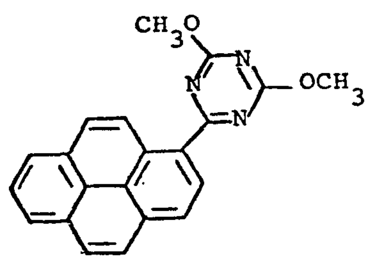

(3)

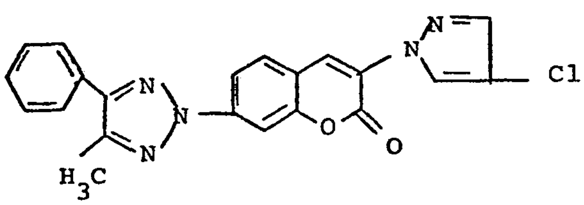

(4)

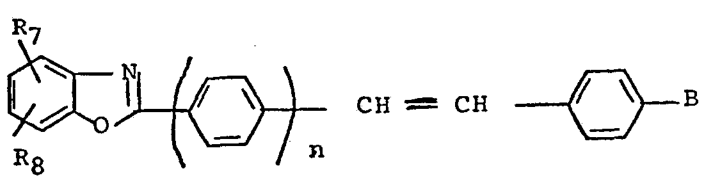

(5)

wobei
n 0 oder 1,
$R_7$ und $R_8$ gleiche oder verschiedene Reste aus der Gruppe Wasserstoff, Fluor, Chlor, Phenyl, Trifluormethyl, Alkyl, Alkoxy, Cyano, Carboxy, Alkoxycarbonyl Carbonsäureamid oder Sulfonsäurealkylester bedeuten, wobei zwei benachbarte Reste $R_7$ und $R_8$ zusammen auch für einen Benzolring, eine niedere Alkylen- oder eine 1,3-Dioxapropylengruppe stehen können,
B Cyano, eine Gruppe der Formel $—COOR_9$ oder $CONR_9R_9$, wobei $R_9$ Wasserstoff, $C_1$-$C_{18}$-Alkyl, Cycloalkyl, Aryl, Alkylaryl, Halogenaryl, Aralkyl, Alkoxyalkyl, Halogenalkyl, Hydroxyalkyl, Alkoxycarbonyl oder Alkoxycarbonylalkyl bedeutet oder zwei Alkyl- bzw. Alkylenreste unter der Bedeutung von $R_9$ zusammen mit dem Stickstoffatom auch einen Morpholin-, Piperidin- oder Piperazinring bilden können, bedeutet, oder
B eine Gruppe der Formeln

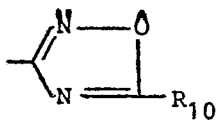, 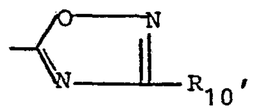, 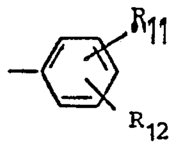 oder 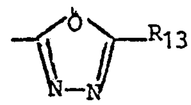

bedeutet,
wobei $R_{10}$ eine geradkettige oder verzweigte Alkylgruppe mit 1-18 C-Atomen, vorzugsweise 1-6 C-Atomen, die durch Hydroxylgruppen, Halogenatome, Alkoxy-, Aryloxy- oder Arylreste substituiert sein kann oder $R_{10}$ eine Gruppe der Formel $-(CH_2CH_2O)_n-R$ mit n 1, 2 oder 3 und R = H oder Alkyl oder $R_{10}$ einen Rest der Formel

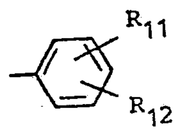

bedeutet, $R_{11}$ und $R_{12}$ gleiche oder verschiedene Reste aus der Gruppe Wasserstoff, Fluor, Phenyl, Alkyl, Alkoxy, Acylamino, Cyano, Carboxy, Alkoxycarbonyl, Carbonsäureamid oder Sulfonsäurealkylester bedeuten, wobei zwei benachbarte Reste $R_{11}$ und $R_{12}$ zusammen auch für eine Alkylengruppe, einen ankondensierten Benzolring oder eine 1,3-Dioxapropylengruppe stehen können und $R_{13}$ einen Phenylring, der durch eine Alkyl- oder Alkoxyalkylgruppe, Cyano- oder Alkoxycarbonylgruppe substituiert sein kann, bedeutet mit der Maßgabe, daß alle Alkyl- und Alkoxygruppen sowie andere, davon abgeleitete Gruppen, 1 bis 4 C-Atome enthalten, soweit nicht anders definiert.

2. Mischungen von optischen Aufhellern nach Anspruch 1, dadurch gekennzeichnet, daß sie eine Verbindung der Formel (1) enthalten, worin $R_2$, $R_4$, $R_5$ und $R_6$ Wasserstoff darstellen und $R_1$ und $R_3$ Methyl oder Ethyl jeweils in 5-Stellung bedeuten.

3. Mischungen von optischen Aufhellern nach Anspruch 1, dadurch gekennzeichnet, daß sie als Verbindung der Formel 5 eine Verbindung der Formel

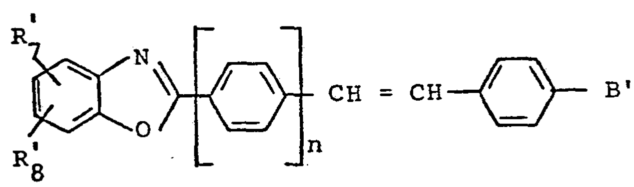

(5a)

enthalten, wobei $R'_7$ und $R'_8$ zusammen einen ankondensierten Benzolring oder Wasserstoff, Chlor, Alkyl oder Phenyl, n 0 oder 1 und B' eine Gruppe der Formeln

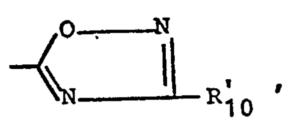 , 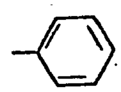 , —CN oder —COO-Alkyl

und $R'_{10}$ Alkyl oder Alkoxyalkyl bedeutet.

4. Mischungen von optischen Aufhellern nach Anspruch 1, dadurch gekennzeichnet, daß sie als Verbindung der Formel (5) eine Verbindung der Formeln

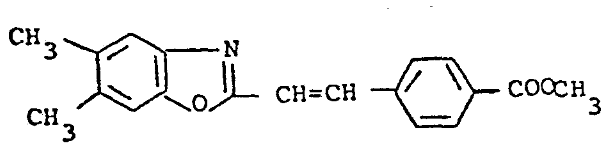

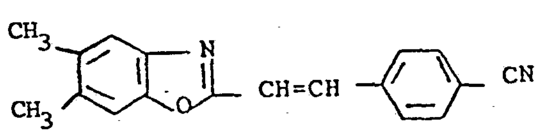

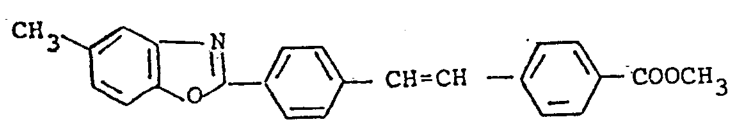

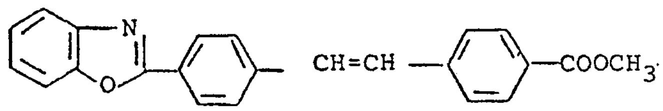

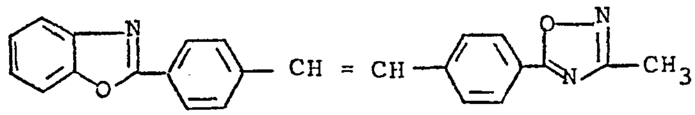

enthalten.

5. Mischungen von optischen Aufhellern nach Anspruch 1, dadurch gekennzeichnet, daß sie 50 bis 99 Gew.-% einer Verbindung der Formel 1 und 50 bis 1 Gew.-% einer Verbindung der Formeln 2 bis 5 enthalten.

**Claims**

1. Mixtures of optical brighteners, which contain

a) 1 to 99 % by weight of one or more compounds of the formula (1)

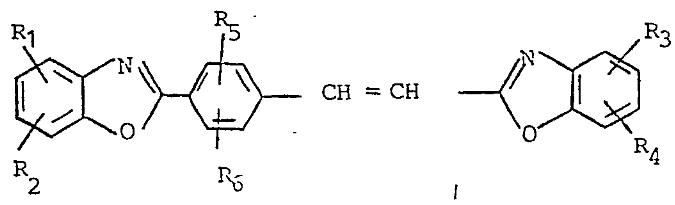

(1)

wherein $R_1$, $R_2$, $R_3$, $R_4$, $R_5$ and $R_6$ can be identical or different and denote hydrogen, chlorine, carbalkoxy, alkyl or alkoxy and

b) 99 to 1 % by weight of one or more compounds of the formulae (2), (3), (4) and (5)

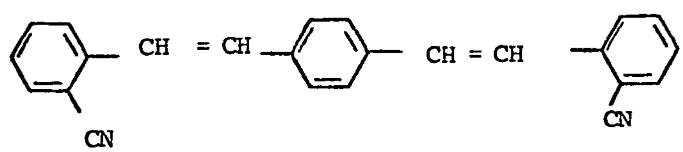

(2)

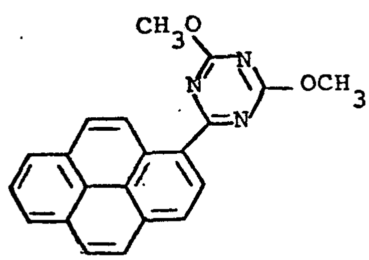

(3)

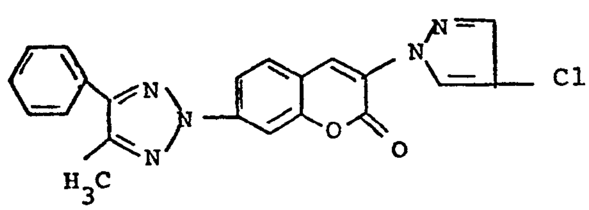

(4)

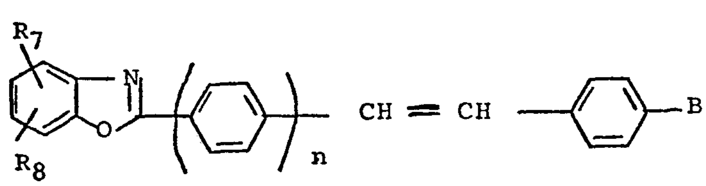

(5)

in which

n denotes 0 or 1,

$R_7$ and $R_8$ denote identical or different radicals from the group comprising hydrogen, fluorine, chlorine, phenyl, trifluoromethyl, alkyl, alkoxy, cyano, carboxyl, carboalkoxy, carboxamide and alkyl sulfonates, and two adjacent radicals $R_7$ and $R_8$ together can also represent a benzene ring, a lower alkylene group or a 1,3-dioxapropylene group,

B denotes cyano, a group of the formula $-COOR_9$ or $CONR_9R_9$, in which $R_9$ denotes hydrogen, $C_1$-$C_{18}$-alkyl, cycloalkyl, aryl, alkyl-aryl, halogenaryl, aralkyl, alkoxyalkyl, halogenalkyl, hydroxyalkyl, carboxyalkyl or carboalkoxyalkyl, or two alkyl radicals or alkylene radicals of the meaning of $R_9$ together with the nitrogen atom can also form a morpholine, piperidine or piperazine ring, or

B denotes a group of the formulae

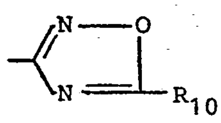 , 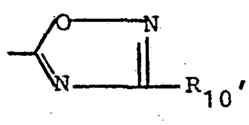 , 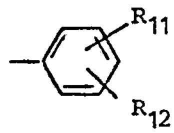 or 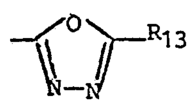

in which

$R_{10}$ denotes a straight-chain or branched alkyl group having 1-18 C atoms, preferably 1-6 C atoms, which can be substituted by hydroxyl groups, halogen atoms, alkoxy radicals, aryloxy radicals or aryl radicals, or $R_{10}$ denotes a group of the formula $-(CH_2CH_2O)_n-R$ with n denoting 1,2 or 3 and R denoting H or alkyl, or $R_{10}$ denotes a radical of the formula

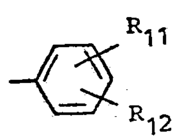

$R_{11}$ and $R_{12}$ denote identical or different radicals from the group comprising hydrogen, fluorine, phenyl, alkyl, alkoxy, acylamino, cyano, carboxyl, carboalkoxy, carboxamide and alkyl sulfonates, and two adjacent radicals $R_{11}$ and $R_{12}$ together can also represent an alkylene group, a fused-on benzene ring or a 1,3-dioxapropylene group, and $R_{13}$ denotes a phenyl ring which can be substituted by an alkyl group, an alkoxyalkyl group, a cyano group or a carbalkoxy group, with the proviso that all alkyl and alkoxy groups as well as other groups derived therefrom contain 1 to 4 carbon atoms unless defined otherwise.

2. Mixtures of optical brighteners, as claimed in claim 1, which contain a compound of the formula (1), in which $R_2$, $R_4$, $R_5$ and $R_6$ represent hydrogen and $R_1$ and $R_3$ denote methyl or ethyl in each case in the 5-position.

3. Mixtures of optical brighteners, as claimed in claim 1, which contain, as a compound of the formula 5, a compound of the formula

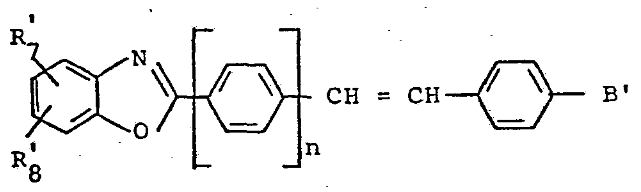 (5a)

in which $R'_7$ and $R'_8$ together denote a fused-on benzene ring or denote hydrogen, chlorine, alkyl or phenyl, n denotes 0 or 1 and B' denotes a group of the formulae

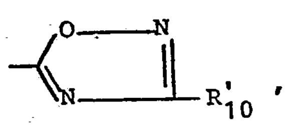 , 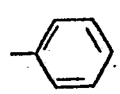 , —CN or —COO-alkyl

and $R'_{10}$ denotes alkyl or alkoxyalkyl.

4. Mixtures of optical brighteners, as claimed in claim 1, which contain, as a compound of the formulae (5), a compound of the formulae

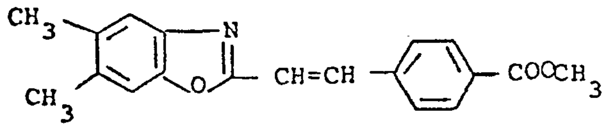

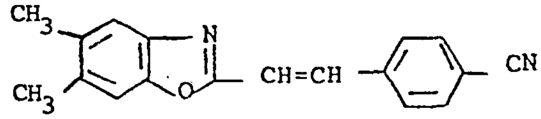

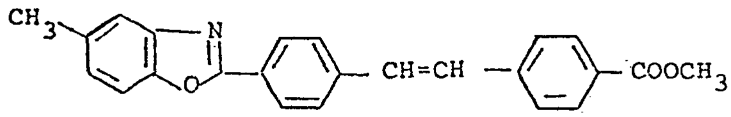

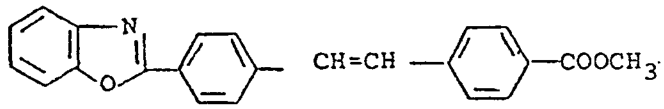

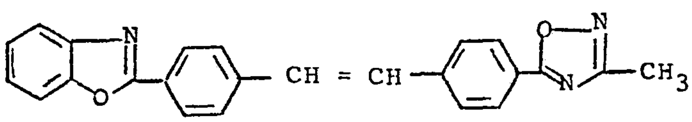

5. Mixtures of optical brighteners, as claimed in claim 1, which contain 50 to 99 % by weight of a compound of the formula 1 and 50 to 1 % by weight of a compound of the formulae 2 to 5.

**Revendications**

1. Mélanges d'azureurs optiques caractérisés en ce qu'ils sont constitués

a) de 1 à 99 % en poids d'un ou plusieurs composés répondant à la formule 1

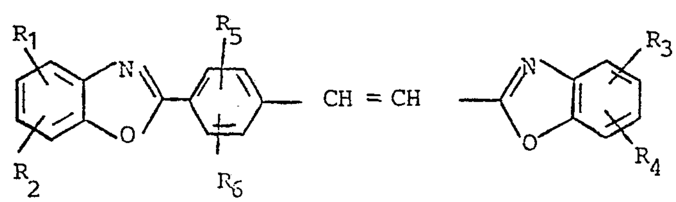

(1)

dans laquelle $R_1$, $R_2$, $R_3$, $R_4$, $R_5$ et $R_6$ sont identiques ou différents les uns des autres et représentent chacun l'hydrogène, le chlore, un alcoxycarbonyle, un alkyle ou un alcoxy, et

b) de 99 à 1 % en poids d'un ou plusieurs composés répondant à l'une des formules 2, 3, 4 et 5

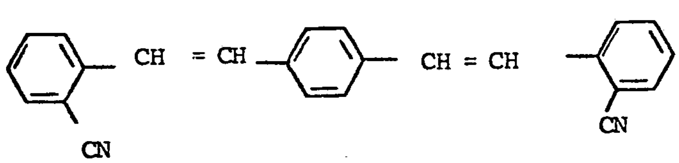

(2)

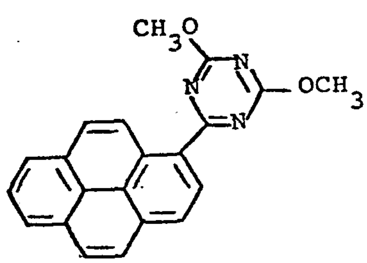

(3)

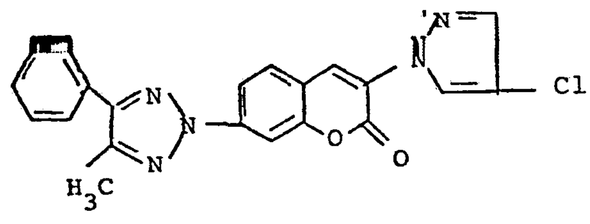

(4)

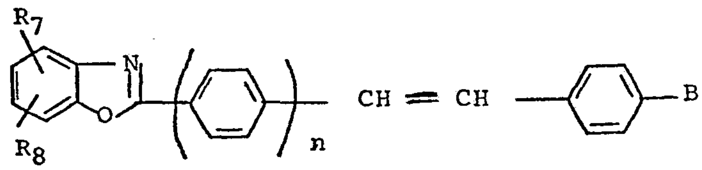

(5)

où

n est égal à 0 ou à 1,

$R_7$ et $R_8$ représentent chacun, indépendamment l'un de l'autre, un atome d'hydrogène, de fluor ou de chlore ou un radical phényle, trifluorométhyle, alkyle, alcoxy, cyano, carboxy, alcoxycarbonyle, carbamoyle ou alcoxysulfonyle, deux radicaux $R_7$ et $R_8$ voisins pouvant également former ensemble un noyau benzénique, un radical alkylène inférieur ou un radical dioxa-1,3 propylène,

B représente un radical cyano, un radical $-COOR_9$ ou un radical $-CONR_9R_9$ dans lesquels $R_9$ représente l'hydrogène, un alkyle en $C_1$-$C_{18}$, un cycloalkyle, un aryle, un alkylaryle, un halogénoaryle, un aralkyle, un alcoxyalkyle, un halogéno-alkyle, un hydroxyalkyle, un alcoxycarbonyle ou un alcoxycarbonylalkyle, ou deux radicaux alkyles ou alkylènes $R_9$ pouvant également former ensemble, et avec l'atome d'azote, un noyau de morpholine, de pipéridine ou de pipérazine, ou

B représente un radical répondant à l'une des formules suivantes

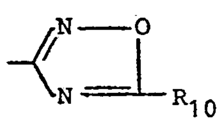 , 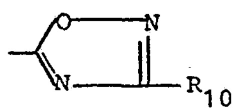 , 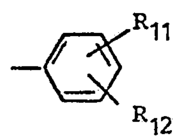 et 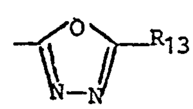

dans lesquelles $R_{10}$ représente un radical alkyle, linéaire ou ramifié, contenant de 1 à 18 atomes de carbone, de préférence de 1 à 6, et portant éventuellement des radicaux hydroxy, des atomes d'halogènes ou des radicaux alcoxy, aryloxy ou aryles, ou $R_{10}$ représente un radical $-(CH_2CH_2O)_n-R$ dans lequel n est égal à 1, 2 ou à 3 et R représente H ou un alkyle, ou $R_{10}$ représente un radical de formule

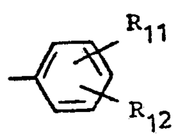

dans lequel $R_{11}$ et $R_{12}$ représentent chacun, indépendamment l'un de l'autre, un atome d'hydrogène ou de fluor ou un radical phényle, alkyle, alcoxy, acylamino, cyano, carboxy, alcoxycarbonyle, carbamoyle ou alcoxysulfonyle, deux radicaux $R_{11}$ et $R_{12}$ voisins pouvant également former ensemble un radical alkylène, un noyau benzénique condensé ou un radical dioxa-1,3 propylène, et $R_{13}$ représente un noyau phénylique éventuellement porteur d'un radical alkyle, alcoxyalkyle, cyano ou alcoxycarbonyle, avec la condition que tous les radicaux alkyles et alcoxy, ainsi que d'autres radicaux qui en dérivent, contiennent chacun de 1 à 4 atomes de carbone, à moins d'indication contraire.

2. Mélanges d'azureurs optiques selon la revendication 1, caractérisé en ce qu'ils contiennent un composé de formule 1 dans lequel $R_2$, $R_4$, $R_5$ et $R_6$ représentent chacun l'hydrogène tandis que $R_1$ et $R_3$ représentent chacun un méthyle ou un éthyle occupant chacun la position 5.

3. Mélanges d'azureurs optiques selon la revendication 1, caractérisés en ce qu'ils contiennent, comme composé de formule 5, un composé répondant à la formule 5a

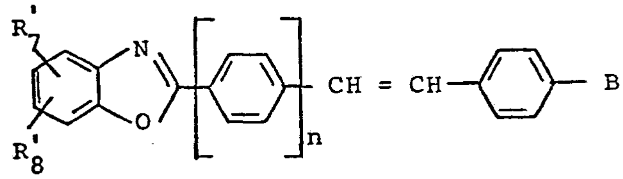

(5a)

dans laquelle $R'_7$ et $R'_8$ forment ensemble un noyau benzénique condensé ou représentent chacun l'hydrogène, le chlore, un alkyle ou un phényle, n est égal à 0 ou à 1 et B' représente un radical —CN, —COO-alkyle, un radical phényle ou un radical de formule

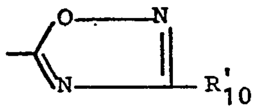

dans lequel $R'_{10}$ représente un radical alkyle ou alcoxyalkyle.

4. Mélanges d'azureurs optiques selon la revendication 1, caractérisés en ce qu'ils contiennent, comme composé de formule 5, un composé répondant à l'une des formules suivantes

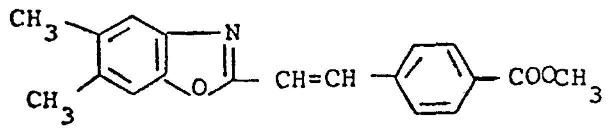

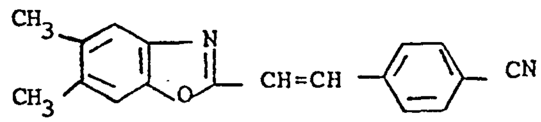

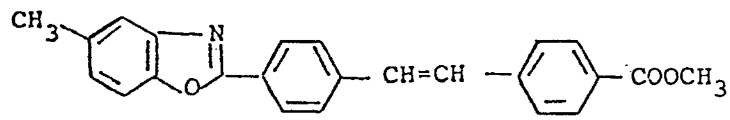

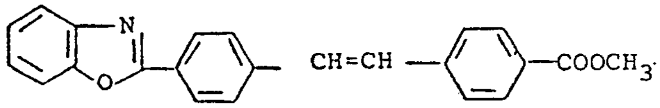

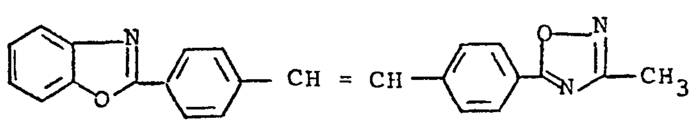

5. Mélanges d'azureurs optiques selon la revendication 1, caractérisés en ce qu'ils contiennent de 50 à 99 % en poids d'un composé de formule 1 et de 50 à 1 % en poids d'un composé répondant à l'une des formules 2 à 5.